# EUROPEAN PATENT SPECIFICATION

(11) **EP 2 722 161 B1**
(45) Date of publication and mention of the grant of the patent: **17.06.2015**
(21) Application number: 12799846.6
(22) Date of filing: 05.04.2012
(51) Int. Cl.: B29D 29/10, B29C 47/06, F16G 5/06, B29C 47/00, B29C 47/02, B29C 47/38, B29C 47/04, B29C 47/88, F16G 5/20, F16G 5/08

(54) **METHOD FOR MANUFACTURING A V-RIBBED BELT**
VERFAHREN ZUR HERSTELLUNG EINES KEILRIPPENRIEMENS
PROCEDE DE FABRICATION D'UNE COURROIE A NERVURES EN V

(30) Priority: 17.06.2011 JP 2011135515
(43) Date of publication of application: 23.04.2014
(73) Proprietor: Bando Chemical Industries, Ltd., Kobe-shi, Hyogo 650-0047 (JP)
(72) Inventor: OKUBO, Takayuki, Kobe-shi Hyogo 650-0047 (JP); SHIRIIKE, Hiroyuki, Kobe-shi Hyogo 650-0047 (JP)
(74) Representative: Dantz, Jan Henning
(86) International application number: PCT/JP2012/002393
(87) International publication number: WO 2012/172717

(56) References cited:
- WO-A1-2009/101799
- WO-A1-2009/101799
- DE-B- 1 062 994
- JP-A- 8 074 936
- JP-A- 54 150 540
- JP-A- 2004 216 857
- JP-A- 2007 255 635
- US-A- 3 607 502
- US-A1- 2010 331 129

## Description

### TECHNICAL FIELD

The present disclosure relates to fabrication methods of a V-ribbed belt.

### BACKGROUND ART

In V-ribbed belts, V-shaped ribs are made of a rubber composition blended with short fibers oriented in a belt width direction, and the friction coefficient of the V-ribbed surface is thereby adjusted in order to reduce noise during power transmission while ensuring sufficient power transmission capability. In fabricating the V-ribbed belts, it is known to form an uncrosslinked rubber sheet for forming the V-shaped ribs by extrusion molding.

For example, Japanese Patent Publication No. H08-074936 shows a V-ribbed belt fabrication method in which a ribbed, cylindrical rubber tube which is made of a rubber composition blended with short fibers and which has, on an outer peripheral portion or an inner peripheral portion thereof, a V-ribbed portion prepared in a shape slightly larger than the V-shaped ribs, is extruded using an extruder provided with an expansion die having V-ribbed portion molding grooves. Using the ribbed, cylindrical rubber tube, a V-ribbed belt molded body is formed on a vulcanization die and is vulcanized, and the surface of the V-ribbed portion of the V-ribbed belt molded body is ground thereafter, thereby forming the V-shaped ribs.

Japanese Patent Publication No. 2004-216857 shows a V-ribbed belt fabrication method in which, using an extruder provided with an expansion die, rubber is extruded into a double-layered, tubular molded body in which a rubber composition blended with short fibers as an inner layer and another rubber composition as a surface layer are layered on each other. The double-layered, tubular molded body is interposed between an inner mold having a flexible jacket on its outer circumferential surface, and an outer mold having a ribbed die craved in its inner circumferential surface. The flexible jacket of the inner mold is expanded to make the tubular molded body in close contact with the ribbed die of the outer mold, thereby preparing an unvulcanized molded body.

WO 2009/101799 A1 discloses a friction transmission belt with a compression rubber layer formed on the inner peripheral sides of ta belt body. A plurality of small pores are fore in the compression rubber layer. JP 2007 255635 discloses a V-ribbed belt having core wires embedded in the body comprising an elongation layer forming a back face and a compression layer forming a friction transmission face formed of a porous rubber composition. A further method of producing a transmission belt is disclosed in JP 54 150540.

### SUMMARY OF THE INVENTION

The present disclosure is directed to a fabrication method of a V-ribbed belt with a plurality of V-shaped ribs each extending in a belt longitudinal direction and having numerous pores in a surface, and arranged side by side in a belt width direction, the method including:
a rubber sheet formation step in which an uncrosslinked rubber composition blended with no short fibers is extruded from an extruder, thereby forming an uncrosslinked rubber sheet in which the V-shaped ribs are to be formed, wherein
in the rubber sheet formation step, at least a surface layer of the uncrosslinked rubber sheet, in which surface layer the V-shaped ribs are to be formed, is made of an uncrosslinked rubber composition blended with at least one of hollow particles or a foaming agent used to form pores in the surface of the V-shaped ribs, as further specified in claims 1, 2, 6 and 11.

### BRIEF DESCRIPTION OF THE DRAWINGS

FIG. 1 is an oblique view of a V-ribbed belt of the first embodiment.
FIG. 2 is a side view showing a schematic configuration of an extruder.
FIG. 3 is a front view of a die of the first example.
FIG. 4 is an oblique view of a plate-like uncrosslinked rubber sheet for use as a compression rubber layer with no V-shaped rib formation portion.
FIG. 5 is a front view of a die of the second example.
FIG. 6 is an oblique view of a plate-like uncrosslinked rubber sheet for use as a compression rubber layer with a V-shaped rib formation portion.
FIG. 7 is a front view of a die of the third example.
FIG. 8 is an oblique view of a cylindrical uncrosslinked rubber sheet for use as a compression rubber layer.
FIG. 9A is a front view of the die of the third example. FIG. 9B is a front view of a die of the fourth example.
FIG. 10 is a longitudinal cross-section of a belt vulcanization-molding die.
FIG. 11 is a partially enlarged longitudinal cross-section of the belt vulcanization-molding die.
FIG. 12A and FIG. 12B are illustrations showing a step of forming a layered body.
FIG. 13A and FIG. 13B are illustrations showing a step of placing the layered body on an outer mold.
FIG. 14A and FIG. 14B are illustrations showing a step of putting the outer mold on the outside of an inner mold.
FIG. 15 is an illustration showing a step of molding a belt slab.
FIG. 16 is an oblique view of a V-ribbed belt of the second embodiment.
FIG. 17 is an illustration showing extrusion molding of the uncrosslinked rubber sheet for use as a compression rubber layer.
FIGS. 18A-18C are oblique views of the uncrosslinked rubber sheet for use as the compression rubber layer.

### DESCRIPTION OF EMBODIMENTS

Embodiments will be described in detail below, based on the drawings.

### [First Embodiment]

### (V-ribbed belt B)

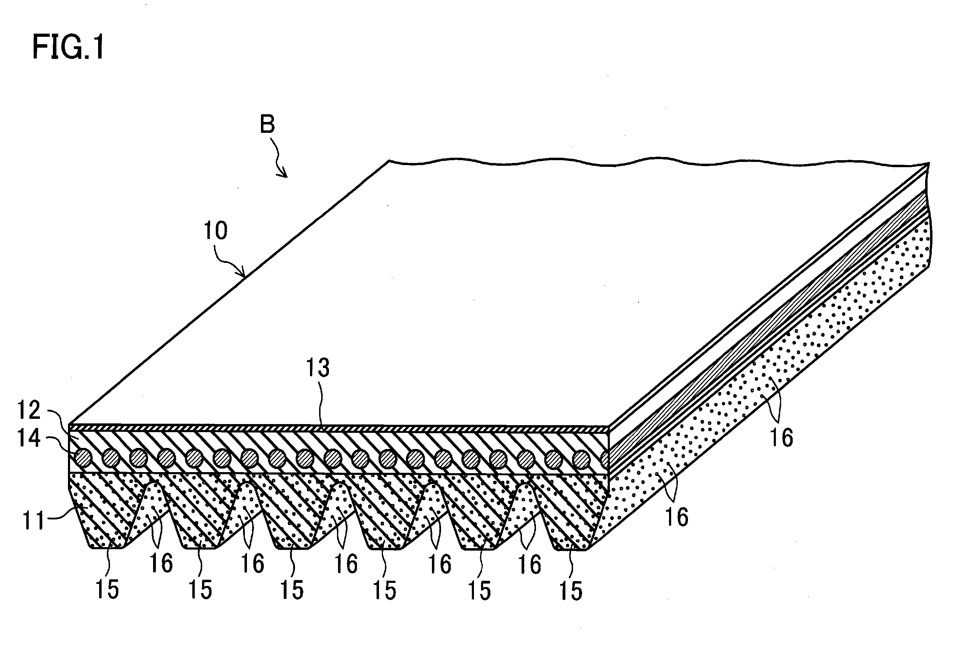

FIG. 1 shows a V-ribbed belt B of the first embodiment. The V-ribbed belt B of the first embodiment is used, for example, as an accessory drive belt transmission system provided in an engine compartment of an automobile. The V-ribbed belt B of the first embodiment has a length of 700 to 3000 mm, a width of 10 to 36 mm, and a thickness of 4.0 to 5.0 mm, for example.

The V-ribbed belt B of the first embodiment includes a three-layer belt body 10 which includes a compression rubber layer 11 constituting an inner surface of the belt, an intermediate adhesion rubber layer 12, and a backside rubber layer 13 constituting an outer surface of the belt. Core wire 14 arranged so as to form a helical pattern at a certain pitch in a width direction of the belt is embedded in the adhesion rubber layer 12 of the belt body 10.

The compression rubber layer 11 includes a plurality of V-shaped ribs 15 which comprise a pulley contacting portion and protrude from the inner surface of the belt. Each of the plurality of V-shaped ribs 15 is in the shape of a rib extending in the longitudinal direction of the belt, and having a substantially inverted triangular cross-section. The V-shaped ribs 15 are aligned in the width direction of the belt. Each of the V-shaped ribs 15 has, for example, a height of 2.0 to 3.0 mm, and a width of 1.0 to 3.6 mm at a proximal end thereof. For example, the belt includes 3-6 ribs (6 ribs in FIG. 1).

The compression rubber layer 11 is made of a rubber composition produced by heating and pressing an uncrosslinked rubber composition prepared by kneading a rubber component blended with various ingredients including a crosslinker, and crosslinking the kneaded product by the crosslinker.

The rubber composition forming the compression rubber layer 11 contains no short fibers. On the other hand, the rubber composition forming the compression rubber layer 11 contains at least one of hollow particles or a foaming agent. Thus, numerous holes are formed in the V-shaped ribs 15, and numerous pores 16 are formed in the surface. Preferably, the number density of the holes and the pores 16 is higher on the surface side than on the inner side of the compression rubber layer 11. The average pore size of the pores 16 is preferably 70 to 120 µm, and more preferably 100 to 120 µm. The average pore size of the pores 16 can be obtained as an average pore size of 50 to 100 pores 16 measured from a surface image.

The adhesion rubber layer 12 is in the shape of a strip having a horizontally elongated rectangular cross section, and has a thickness of 1.0 to 2.5 mm, for example. The backside rubber layer 13 is also in the shape of a strip having a horizontally elongated rectangular cross section, and has a thickness of 0.4 to 0.8 mm, for example. In order to reduce sound generated between the belt back surface and a flat pulley in contact with the belt back surface, the surface of the backside rubber layer 13 preferably has a weave pattern transferred from woven fabric.

Each of the adhesion rubber layer 12 and the backside rubber layer 13 is preferably made of a rubber composition produced by heating and pressing an uncrosslinked rubber composition prepared by kneading a rubber component blended with various ingredients including a crosslinker, and crosslinking the kneaded product by the crosslinker. In order to reduce adhesion between the belt back surface and the flat pulley in contact with the belt back surface, the backside rubber layer 13 is preferably made of a rubber composition which is slightly harder than the rubber composition of the adhesion rubber layer 12.

The core wire 14 is made of twisted yarn 14' to which adhesion treatment with rubber has been performed.

### (Fabrication Method of V-ribbed belt B)

A fabrication method of the V-ribbed belt B of the first embodiment includes a material preparation step, a material positioning step, and a vulcanization molding/finishing step.

### <Material Preparation Step>

### -Uncrosslinked Rubber Sheet 11' for Compression Rubber Layer -

An uncrosslinked rubber sheet 11' for the compression rubber layer, that is, an uncrosslinked rubber sheet 11' in which V-shaped ribs are to be formed, is formed by kneading a rubber component and ingredients which are put in an extruder 20, and extruding the kneaded product (i.e., a rubber sheet formation step). Here, an uncrosslinked rubber composition prepared beforehand by kneading the rubber component and the ingredients which are put in a mixer, e.g., a kneader and a Banbury mixer, may be put in the extruder 20.

Examples of the rubber component contained in the uncrosslinked rubber sheet 11' for the compression rubber layer includes an ethylene-α-olefin elastomer such as ethylene propylene copolymer (EPR), ethylene propylene diene terpolymer (EPDM), ethylene octene copolymer, and ethylene butane copolymer; chloroprene rubber (CR); chlorosulfonated polyethylene rubber (CSM); and hydrogenated acrylonitrile-butadiene rubber (H-NBR). Among them, the ethylene-α-olefin elastomer is preferable as the rubber component. The rubber component may be made of a single material, or a blend of two or more materials.

The ingredients include at least one of hollow particles or a foaming agent intended to form the pores 16 in the surface of the V-shaped ribs 15. That is, only one of the hollow particles or the foaming agent may be contained, or both of them may be contained.

Examples of the hollow particles include thermally expandable hollow particles in which a solvent is encapsulated. The average particle size of the hollow particle before expansion is preferably 15 to 50 µm, and more preferably 25 to 35 µm. An expansion start temperature of the hollow particles is, for example, 140 to 180°C, and preferably 160 to 180°C. The expansion rate of the hollow particles is, for example, two to ten times the particle size (i.e., the cell diameter). The hollow particles may be made of a single material, or two or more materials. Preferably, 0.5 to 15 parts by mass, more preferably 1 to 5 parts by mass of the hollow particles are blended into 100 parts by mass of the rubber component. The hollow particles which are commercially available include, for example, ADVANCELL (trade name) EHM303 (particle size of 29 µm), ADVANCELL EHM302 (particle size of 21 µm), ADVANCELL EHM204 (particle size of 40 µm), and ADVANCELL EM501 (particle size of 27 µm) manufactured by Sekisui Chemical Co., Ltd.

The foaming agent may be made of a single material, or two or more materials. A foaming start temperature of the foaming agent is, for example, 80 to 180°C, and preferably 140 to 170°C. Preferably, 1 to 20 parts by mass, more preferably 5 to 15 parts by mass of the foaming agent are blended into 100 parts by mass of the rubber component. The foaming agents which are commercially available include, for example, NEOCELLBORN (trade name) N#1000M manufactured by Eiwa Chemical Ind. Co., Ltd.

In order to increase resistance to wear, the ingredients preferably contain powdery or grainy montmorillonite, or powdery or grainy ultra high molecular weight polyethylene resin with a weight average molecular weight of one million or more, as a material that reduces a friction coefficient. For example, 10 to 40 parts by mass of the material that reduces a friction coefficient is blended in 100 parts by mass of the rubber component. The particle size of the material that reduces a friction coefficient is, for example, 1 to 150 µm.

Other examples of the ingredients may include a reinforcing material such as carbon black, a softener, a processing aid, a vulcanization aid, a crosslinker, a vulcanization accelerator, and resin for rubber blending. The rubber composition which forms the compression rubber layer 11 does not contain short fibers. Thus, the ingredient does not include short fibers.

Examples of the reinforcing material, especially the carbon black includes: channel black; furnace black such as SAF, ISAF, N-339, HAF, N-351, MAF, FEF, SRF, GPF, ECF, and N-234; thermal black such as FT and MT; and acetylene black. Silica may also be used as the reinforcing material. The reinforcing material may be made of a single material, or two or more materials. In order that resistance to wear and resistance to bending fatigue will be well balanced, 30 to 80 parts by mass of the reinforcing material is preferably blended into 100 parts by mass of the rubber component.

Examples of the softener include: petroleum softeners; mineral oil-based softeners such as paraffin wax; and vegetable oil based-softeners such as castor oil, cottonseed oil, linseed oil, rapeseed oil, soybean oil, palm oil, coconut oil, peanut oil, Japan wax, rosin, and pine oil. The softener may be made of a single material, or two or more materials. For example, 2 to 30 parts by mass of the softener is blended into 100 parts by mass of the rubber component.

Examples of the processing aid include stearic acids. The processing aid may be made of a single material, or two or more materials. For example, 0.5 to 5 parts by mass of the processing aid is blended into 100 parts by mass of the rubber component.

Examples of the vulcanization aid include metal oxides such as magnesium oxide and zinc oxide (zinc white). The vulcanization aid may be made of a single material, or two or more materials. For example, 1 to 10 parts by mass of the vulcanization aid is blended into 100 parts by mass of the rubber component.

Examples of the crosslinker include sulfur and organic peroxides. Sulfur or an organic peroxide may be used alone as the crosslinker, or both of sulfur and the organic peroxide may also be used in combination. For example, 0.5 to 4.0 parts by mass of sulfer as the crosslinker is blended into 100 parts by mass of the rubber component. For example, 0.5 to 8 parts by mass of organic peroxide as the crosslinker is blended into 100 parts by mass of the rubber component.

Examples of the vulcanization accelerator include metal oxides, metal carbonates, fatty acids and the derivatives thereof. The vulcanization accelerator may be made of a single material, or two or more materials. For example, 0.5 to 8 parts by mass of the vulcanization accelerator is blended into 100 parts by mass of the rubber component.

Examples of the resin for rubber blending include phenolic resin. The resin for rubber blending may be made of a single material, or two or more materials. For example, 0 to 20 parts by mass of the resin for rubber blending is blended into 100 parts by mass of the rubber component.

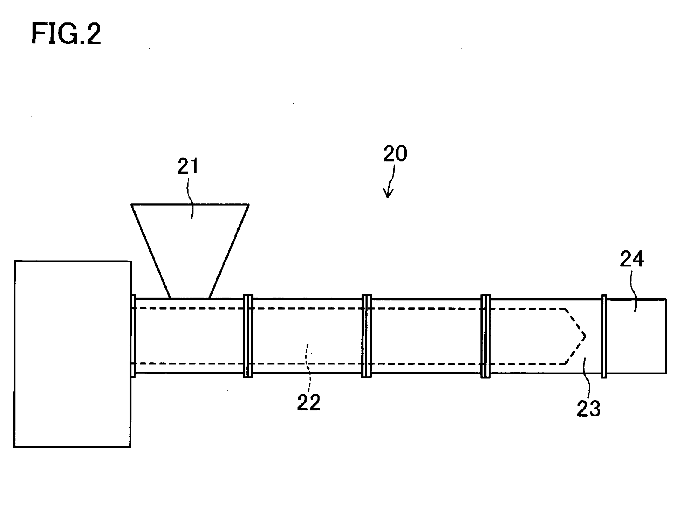

FIG. 2 shows the extruder 20 used in this step.

The extruder 20 is provided with a hopper 21, which is used to supply materials, on the upstream side thereof, and includes a cylinder 23 in which a screw 22 is inserted. The extruder 20 is configured such that the rubber component and the ingredients put into the extruder 20 through the hopper 21 is kneaded in the cylinder 23 with a blade of the screw 22, thereby forming an unvulcanized rubber composition, and delivering the unvulcanized rubber composition to the downstream side. The cylinder 23 is divided into a plurality of zones along a longitudinal direction thereof, and a separate processing temperature can be set for each zone. The inner diameter and the inner length of the cylinder 23 are not specifically limited.

A die 24 is provided at the downstream end of the cylinder 23. The uncrosslinked rubber sheet 11' for the compression rubber layer is extruded as a molded body from a discharge opening 24a formed in the die 24. A processing temperature of the die 24 can be set separately from the processing temperature of the cylinder 23.

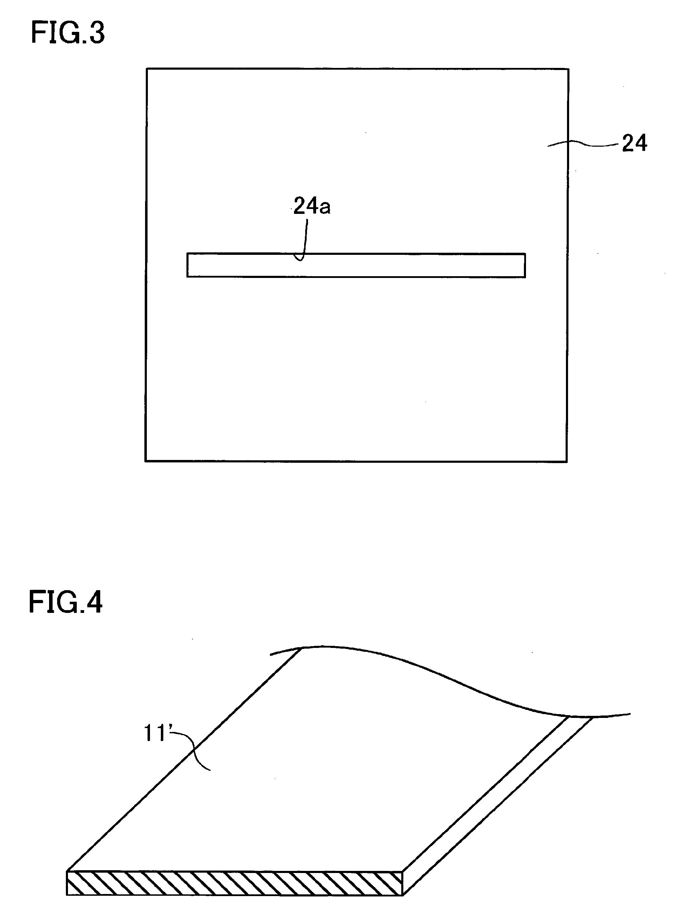

As shown in FIG. 3, the discharge opening 24a of the die 24 may be in a narrow rectangular slit-like shape. In this case, as shown in FIG. 4, a long flat plate-like uncrosslinked rubber sheet 11' is extruded as a molded body. In other words, in the rubber sheet formation step, the extruder 20 may extrude the flat plate-like uncrosslinked rubber sheet 11', using the die 24 provided at the extruder 20 and having the discharge opening 24a in the narrow rectangular slit-like shape. The width and the thickness of the uncrosslinked rubber sheet 11' are not specifically limited.

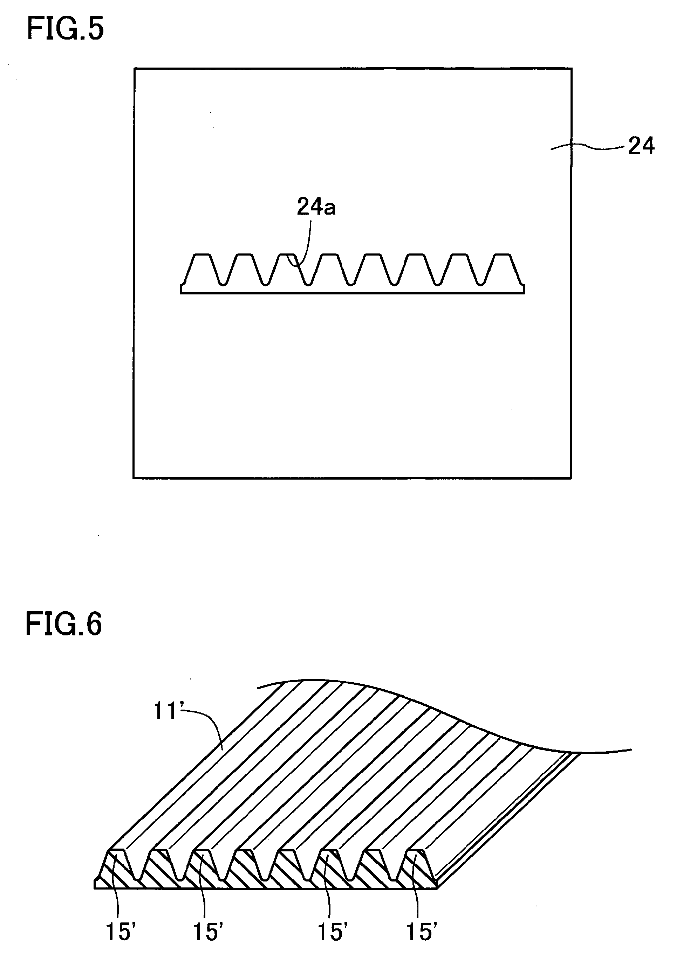

As shown in FIG. 5, the discharge opening 24a of the die 24 may be in a narrow slit-like shape, with grooves in the form of V-shaped ribs arranged side by side along one of long sides of the slit-like shape. In this case, as shown in FIG. 6, a long flat plate-like uncrosslinked rubber sheet 11' having in one surface thereof a plurality of V-shaped rib formation portions 15' extending in an extrusion direction and arranged side by side is extruded as a molded body. In other words, in the rubber sheet formation step, the extruder 20 may extrude the flat plate-like uncrosslinked rubber sheet 11' having a plurality of V-shaped rib formation portions 15' which extend in the extrusion direction and are arranged side by side, using the die 24 provided at the extruder 20 and having the narrow slit-like discharge opening 24a with grooves in the form of V-shaped ribs being arranged side by side along one of long sides of the slit-like opening. The V-shaped rib formation portions 15' may have the same dimensions as the dimensions of the V-shaped ribs 15, or may have larger dimensions than the dimensions of the V-shaped ribs 15, and moreover, may have smaller dimensions than the dimensions of the V-shaped ribs 15 in the case where hollow particles and/or a foaming agent is dispersed or another material is layered on the surface after extrusion molding.

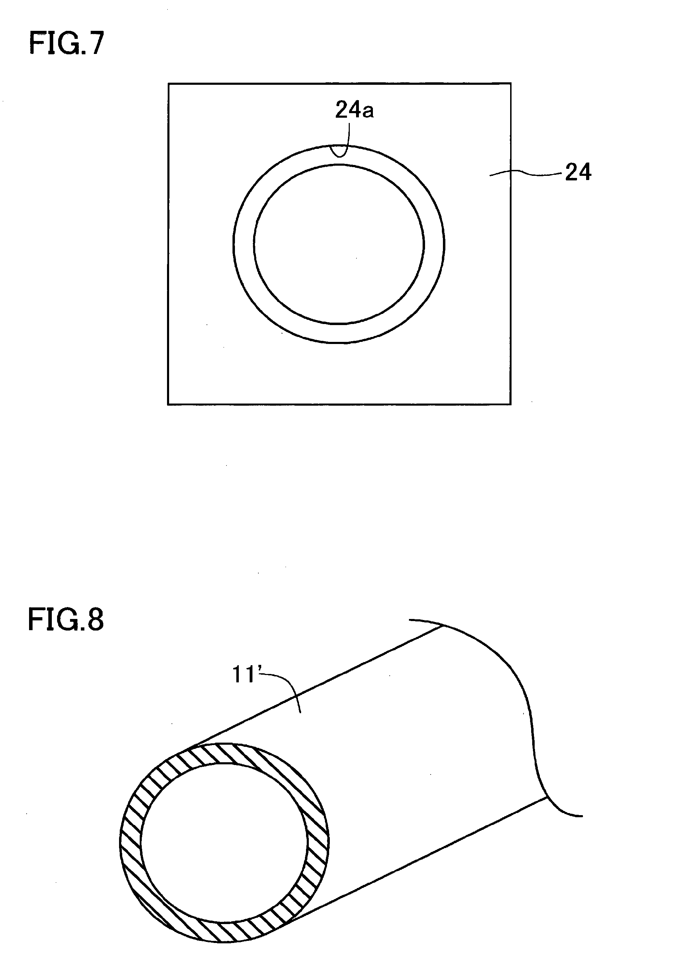

The discharge opening 24a of the die 24 may be in a circular shape, as shown in FIG. 7. In this case, as shown in FIG. 8, a long tubular uncrosslinked rubber sheet 11' is extruded as a molded body. In the vulcanization molding step which will be described later, the uncrosslinked rubber sheet 11' is placed on a cylindrical rubber sleeve 35, and the tubular uncrosslinked rubber sheet 11' shown in FIG. 8 may directly cover the cylindrical rubber sleeve 35. In other words, in the rubber sheet formation step, the extruder 20 may extrude the tubular uncrosslinked rubber sheet 11', using the die 24 provided at the extruder 20 and having the discharge opening 24a in the circular shape. In the succeeding V-shaped rib formation step, as will be described later, the tubular uncrosslinked rubber sheet 11' formed in the rubber sheet formation step may be made to cover the tubular rubber sleeve 35 to come in contact with a mold surface of a belt vulcanization-molding die 30 in which surface a V-shaped rib formation groove 33 is formed, and the tubular uncrosslinked rubber sheet 11' may be heated and pressed, thereby crosslinking the tubular uncrosslinked rubber sheet 11' and forming the V-shaped ribs 15. The tubular uncrosslinked rubber sheet 11' may be cut along the longitudinal direction thereof to use it as the flat plate-like uncrosslinked rubber sheet 11' shown in FIG. 4. In other words, in the rubber sheet formation step, the extruder 20 may extrude the tubular uncrosslinked rubber sheet 11' having on its inner circumferential surface a plurality of V-shaped rib formation portions 15' which extend in the extrusion direction and are arranged side by side, using the die 24 provided at the extruder 20 and having the circular discharge opening 24a with grooves in the form of V-shaped ribs being arranged side by side in the inner circumferential surface thereof, and the tubular uncrosslinked rubber sheet 11' may be cut along the longitudinal direction thereof to turn it into a flat plate-like shape. The circumference and the thickness of the tubular uncrosslinked rubber sheet 11' are not specifically limited.

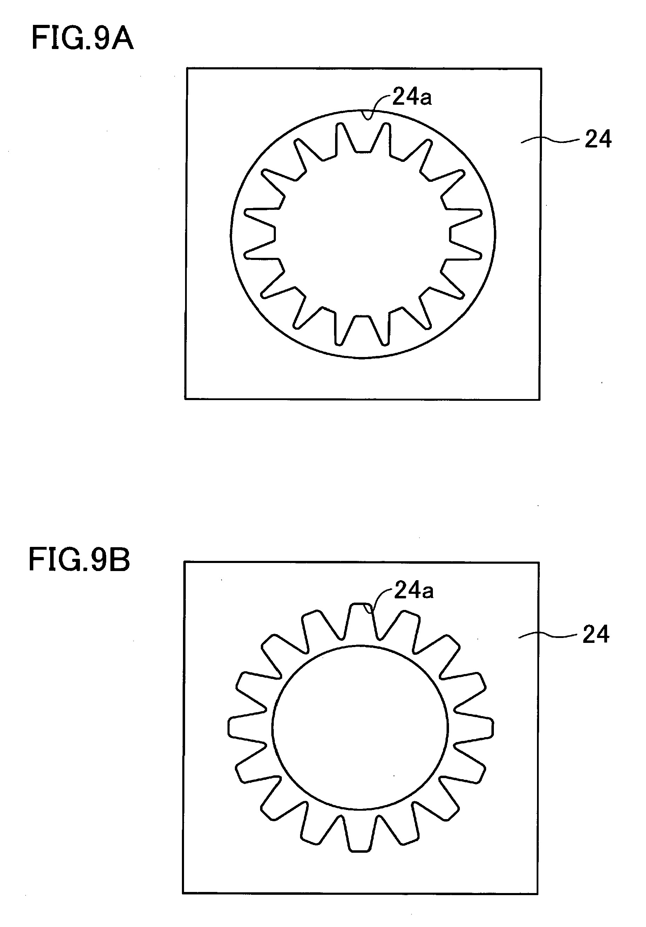

As shown in FIG. 9A, the discharge opening 24a of the die 24 may be in a circular shape with grooves in the form of V-shaped ribs being arranged side by side along the inner circumference surface thereof, or as shown in FIG. 9B, may be in a circular shape with the grooves in the form of V-shaped ribs being arranged side by side along the outer circumferential surface thereof. In these cases, a long tubular uncrosslinked rubber sheet 11' having, on the inner circumferential surface or the outer circumferential surface thereof, a plurality of V-shaped rib formation portions 15' which extend in the extrusion direction and are arranged side by side is extruded as a molded body. However, in the vulcanization molding step which will be described later, the uncrosslinked rubber sheet 11' needs to be placed on the cylindrical rubber sleeve 35 such that the plurality of V-shaped rib formation portions 15' extend in the circumferential direction. Thus, each of the tubular uncrosslinked rubber sheets 11' extruded from the extruder 20 is cut along the longitudinal direction thereof to use it as the flat plate-like uncrosslinked rubber sheet 11' having on one surface thereof a plurality of V-shaped rib formation portions 15' arranged side by side, as shown in FIG. 6. In other words, in the rubber sheet formation step, the extruder 20 may extrude the tubular uncrosslinked rubber sheet 11' having on the inner circumferential surface or the outer circumferential surface thereof a plurality of V-shaped rib formation portions 15' which extend in the extrusion direction and are arranged side by side, using the die 24 provided at the extruder 20 and having the circular shape with grooves in the form of V-shaped ribs being arranged side by side along the inner circumferential surface or the outer circumferential surface, and the tubular uncrosslinked rubber sheet 11' may be cut along the longitudinal direction to turn it into a flat plate-like shape.

The processing temperatures of the cylinder 23 and the die 24 in the extrusion molding are not specifically limited, and may be equal to or higher than the expansion start temperature of the hollow particles and/or the foaming start temperature of the foaming agent, or may be lower than the expansion start temperature of the hollow particles and/or the foaming start temperature of the foaming agent. In the former case, the hollow particles are heated and expanded and/or the foaming agent is heated and foamed in the extrusion molding. Thus, holes are formed in the uncrosslinked rubber composition. As a result, numerous pores 16 are formed in the surface of the uncrosslinked rubber sheet 11' obtained by the extrusion molding. In the latter case, no hollow particle expands and/or no foaming agent is foamed in the extrusion molding. Thus, no pores 16 are formed in the surface of the uncrosslinked rubber sheet 11' obtained by the extrusion molding.

The latter case is preferable in terms of reducing deformation of the pores 16 formed in the surface of the uncrosslinked rubber sheet 11' in the extrusion molding. In this case, the uncrosslinked rubber sheet 11' may be heated in the vulcanization molding, which will be described later, at a vulcanization molding temperature equal to or higher than the expansion start temperature of the hollow particles and/or the foaming start temperature of the foaming agent, thereby expanding the hollow particles and/or foaming the foaming agent to form holes in the rubber composition and form numerous pores 16 in the surface of the V-shaped ribs 15.

Alternatively, the surface of the uncrosslinked rubber sheet 11' obtained by extrusion molding may be preheated before the V-shaped ribs 15 are formed by vulcanization molding, at a temperature which is equal to or higher than the expansion start temperature of the hollow particles and/or foaming start temperature of the foaming agent, and which is lower than the vulcanization molding temperature, thereby expanding the hollow particles and/or foaming the foaming agent to form holes in the uncrosslinked rubber sheet 11' and form numerous pores 16 in the surface of the uncrosslinked rubber sheet 11'; and the vulcanization molding may be performed using the thus obtained uncrosslinked rubber sheet 11'. In other words, hollow particles may be expanded and/or the foaming agent may be foamed by preheating the surface of the uncrosslinked rubber sheet 11' obtained by the extrusion molding in the rubber sheet formation step, but not yet provided with V-shaped ribs, at a temperature which is equal to or higher than the expansion start temperature of the hollow particles and/or the foaming start temperature of the foaming agent, and which is lower than the temperature at the formation of the V-shaped ribs.

Alternatively, in order to form numerous pores 16 in the surface of the V-shaped ribs 15, it is preferable that only a small amount of hollow particles and/or a foaming agent is initially blended in the uncrosslinked rubber composition; hollow particles and/or a foaming agent is dispersed or applied to the surface of the extruded uncrosslinked rubber sheet 11'; and the hollow particles are expanded and/or the foaming agent is foamed by being heated at the vulcanization molding temperature in the vulcanization molding, thereby forming holes in the rubber composition. In other words, it is preferable that the hollow particles and/or the foaming agent is dispersed or applied to the surface of the uncrosslinked rubber sheet 11' obtained by the extrusion molding in the rubber sheet formation step, but not yet provided with V-shaped ribs, and that the hollow particles are expanded and/or the foaming agent is foamed by the heating in forming the V-shaped ribs.

Now, formation mechanism of the pores 16 from the hollow particles will be described. Hollow particles blended in the rubber composition are expanded in the extrusion molding, the vulcanization molding, or the preheating, and some of the hollow particles present near the surface may be expanded and burst or deformed, and create recessed portions in the surface. The recessed portions comprise the pores 16. This means that the pores 16 can be formed in the rubber surface without removing part of the hollow particles by grinding the surface layer of the rubber. Of course, the surface layer of the rubber may be ground to remove part of the hollow particles and form the pores 16 in the rubber surface. Shells of the hollow particles may remain on the inner walls of the pores 16 formed from the hollow particles.

The rotational frequency of the screw 22 and the hourly discharge amount of the molded body in the extrusion molding are not specifically limited.

Here, in the case of extruding an uncrosslinked rubber composition blended with short fibers, the short fibers are not sufficiently oriented. Thus, the obtained uncrosslinked rubber sheet cannot be formed into a V-ribbed belt that is durable for practical use. Thus, in practice, the uncrosslinked rubber composition blended with short fibers is kneaded and rolled thereafter by a calender to form an uncrosslinked rubber sheet in which the short fibers are oriented in the longitudinal direction. After that, the uncrosslinked rubber sheet is cut in a direction orthogonal to the longitudinal direction to form rubber pieces each having a predetermined length, and the rubber pieces are connected together on their sides, thereby forming an uncrosslinked rubber sheet for forming V-shaped ribs in which the short fibers are oriented in the width direction.

However, in the fabrication method of the V-ribbed belt B of the first embodiment, the uncrosslinked rubber sheet 11' for the compression rubber layer is formed using an uncrosslinked rubber composition blended with no short fibers, but instead, blended with at least one of the hollow particles or the foaming agent, particularly by extrusion molding as described above. Thus, the V-ribbed belt B can be formed without using expensive short fibers and necessity of controlling the orientation of the short fibers, that is, at low cost and a reduced number of steps.

### -Uncrosslinked Rubber Sheets 12', 13' for Adhesion Rubber Layer and Backside Rubber Layer-

An uncrosslinked rubber sheet 12' for the adhesion rubber layer is formed by kneading rubber component and an ingredient put in a mixer, e.g., kneader and a Banbury mixer, and shaping the obtained uncrosslinked rubber composition into a sheet using a calender, etc. An uncrosslinked rubber sheet 13' for the backside rubber layer is formed in a similar manner. The uncrosslinked rubber sheets 12', 13' for the adhesion rubber layer and the backside rubber layer may be formed by extrusion molding, similar to the uncrosslinked rubber sheet 11' for the compression rubber layer.

Examples of the rubber component of the uncrosslinked rubber sheets 12', 13' for the adhesion rubber layer and the backside rubber layer include ethylene-α-olefin elastomers, chloroprene-rubber (CR), chlorosulfonated polyethylene rubber (CSM), and hydrogenated acrylonitrile rubber (H-NBR). The rubber component of the uncrosslinked rubber sheets 12', 13' for the adhesion rubber layer and the backside rubber layer is preferably the same as the rubber component of the uncrosslinked rubber sheet 11' for the compression rubber layer.

Examples of the ingredient include the similar ingredients of the uncrosslinked rubber sheet 11' for the compression rubber layer. However, it is preferable that hollow particles and a foaming agent are not included in the ingredient of the uncrosslinked rubber sheet 12' for the adhesion rubber layer.

The uncrosslinked rubber sheets 11',12', 13' for the compression rubber layer, the adhesion rubber layer, and the backside rubber layer may be made of different rubber compositions, or may be made of the same rubber composition.

### -Twisted Yarn 14' for Core Wire-

Twisted yarn 14' for the core wire is subjected to an adhesion treatment in which the twisted yarn 14' is soaked in an RFL aqueous solution and heated, and thereafter to an adhesion treatment in which the twisted yarn 14' is soaked in rubber cement and then heated and dried.

Examples of fibers which comprise the twisted yarn 14' for the core wire include polyester fibers (PET), polyethylene naphthalate fibers (PEN), aramid fibers, vinylon fibers, etc.

### <Material Positioning Step>

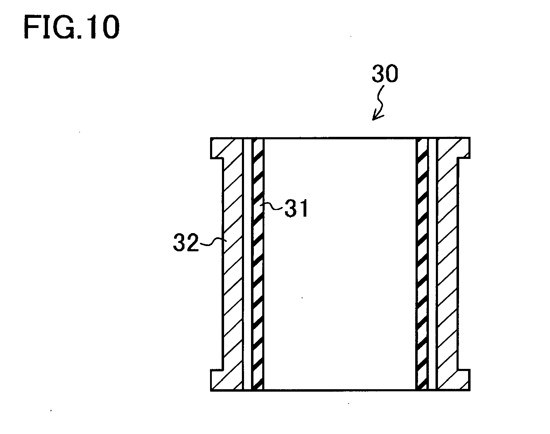

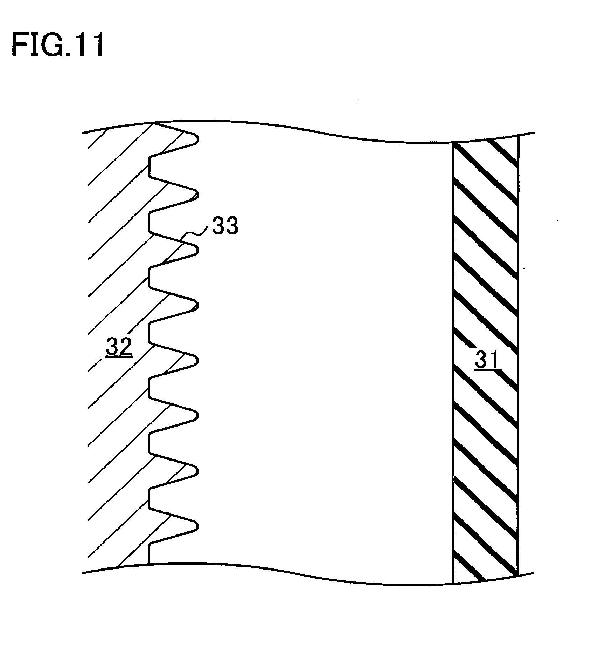

FIGS. 10 and 11 show the belt vulcanization-molding die 30 used in this step.

The belt vulcanization-molding die 30 is comprised of a cylindrical inner mold 31 and a cylindrical outer mold 32 which are concentric with each other. The inner mold 31 is made of a flexible material such as rubber. The outer mold 32 is made of rigid material such as a metal. The inner circumferential surface of the outer mold 32 serves as a molding surface, and V-shaped rib formation grooves 33 are formed in the inner circumferential surface of the outer mold 32 in an axial direction at regular intervals. The outer mold 32 is provided with a temperature control mechanism which allows a heating medium such as water vapor or a cooling medium such as water to flow and control temperature. The belt vulcanization-molding die 30 is provided with a pressurizing means configured to pressurize and expand the inner mold 31 from the inside.

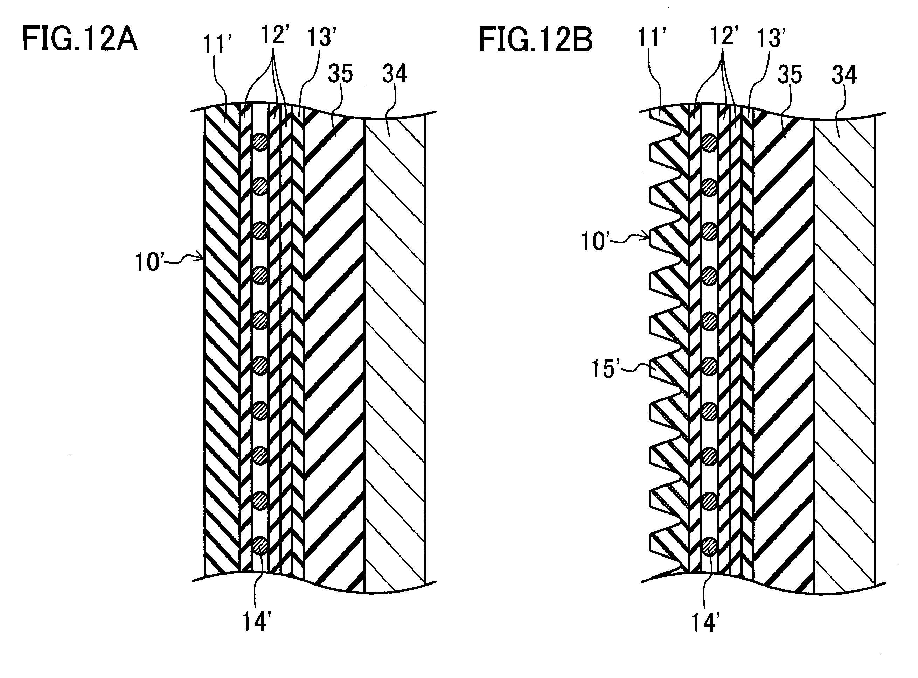

As shown in FIG. 12A and FIG. 12B, as positioning of materials for belt molding, a rubber sleeve 35 is placed on a cylindrical drum 34 having a smooth surface so as to cover the cylindrical drum 34. The outer circumferential surface of the rubber sleeve 35 serves as a molding surface, and a weave pattern of woven fabric, etc., is formed on the outer circumferential surface.

Thereafter, the uncrosslinked rubber sheet 13' for the backside rubber layer and the uncrosslinked rubber sheet 12' for the adhesion rubber layer are sequentially wrapped around the rubber sleeve 35 to form layers. The twisted yarn 14' for the core wire is wrapped around the resultant layers in a helical manner with respect to the cylindrical rubber sleeve 35. Further, the uncrosslinked rubber sheet 12' for the adhesion rubber layer is sequentially wrapped thereon.

After that, the uncrosslinked rubber sheet 11' for the compression rubber layer is placed thereon, thereby forming a layered body 10'. In the case of the uncrosslinked rubber sheet 11' for the flat plate-like compression rubber layer with no V-shaped rib formation portions 15' as shown in FIG. 4, the uncrosslinked rubber sheet 11' for the compression rubber layer is wrapped around the uncrosslinked rubber sheet 12' for the adhesion rubber layer as shown in FIG. 12A, and the both ends are welded together by butt joint or wrap joint. In the case of the uncrosslinked rubber sheet 11' for the compression rubber layer in which a plurality of V-shaped rib formation portions 15' are formed in one surface thereof and are arranged side by side as shown in FIG. 6, the uncrosslinked rubber sheet 11' for the compression rubber layer is wrapped around the uncrosslinked rubber sheet 12' for the adhesion rubber layer as shown in FIG. 12B such that the V-shaped rib formation portions 15' extend in the circumferential direction, and both ends are welded together by butt joint or wrap joint. In the case of the uncrosslinked rubber sheet 11' for the tubular compression rubber layer as shown in FIG. 8, the uncrosslinked rubber sheet 11' for the tubular compression rubber layer is placed on the uncrosslinked rubber sheet 12' for the adhesion rubber layer so as to cover the uncrosslinked rubber sheet 12'. In this case, the configuration is similar to the configuration shown in FIG. 12A.

### <Vulcanization Molding/Finishing Step>

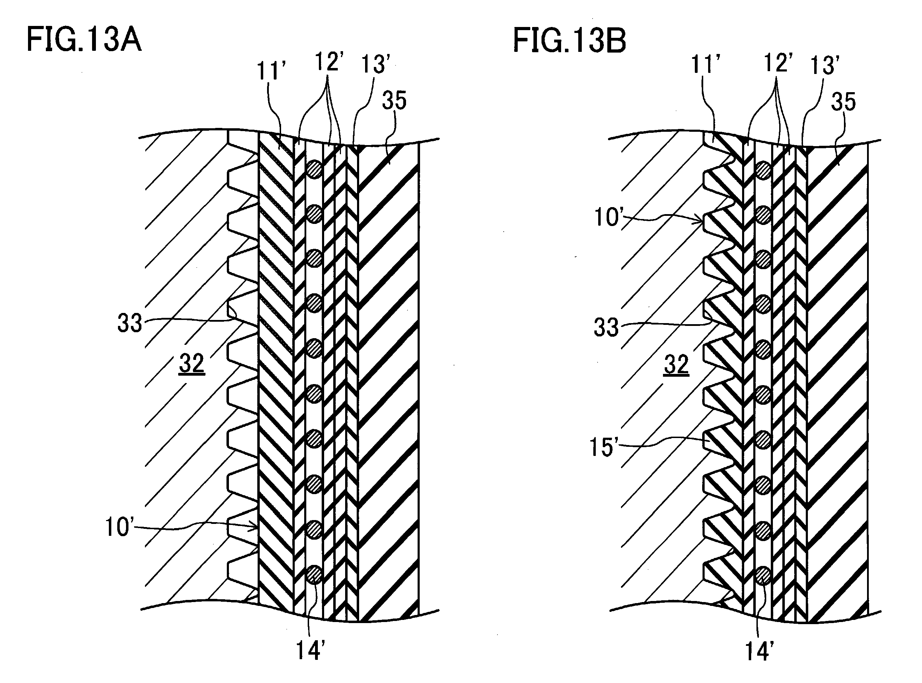

The rubber sleeve 35 having the layered body 10' obtained by positioning the materials thereon is removed from the cylindrical drum 34, and is then fitted to the inner circumferential surface of the outer mold 32. In the case of the uncrosslinked rubber sheet 11' for the compression rubber layer with no V-shaped rib formation portions 15' as shown in FIG. 4 and FIG. 8, the outermost layer of the layered body 10', that is, the uncrosslinked rubber sheet 11' for the compression rubber layer is brought into contact with the inner circumferential mold surface of the outer mold 32 of the belt vulcanization-molding die 30 such that open ends of the V-shaped rib formation grooves 33 is in contact with the uncrosslinked rubber sheet 11', as shown in FIG. 13A. In the case of the uncrosslinked rubber sheet 11' for the compression rubber layer with V-shaped rib formation portions 15' as shown in FIG. 6, the outermost layer of the layered body 10', that is, the uncrosslinked rubber sheet 11' for the compression rubber layer is brought into contact with the inner circumferential mold surface of the outer mold 32 of the belt vulcanization-molding die 30 such that the V-shaped rib formation portions 15' are fitted into the V-shaped rib formation grooves 33, as shown in FIG. 13B.

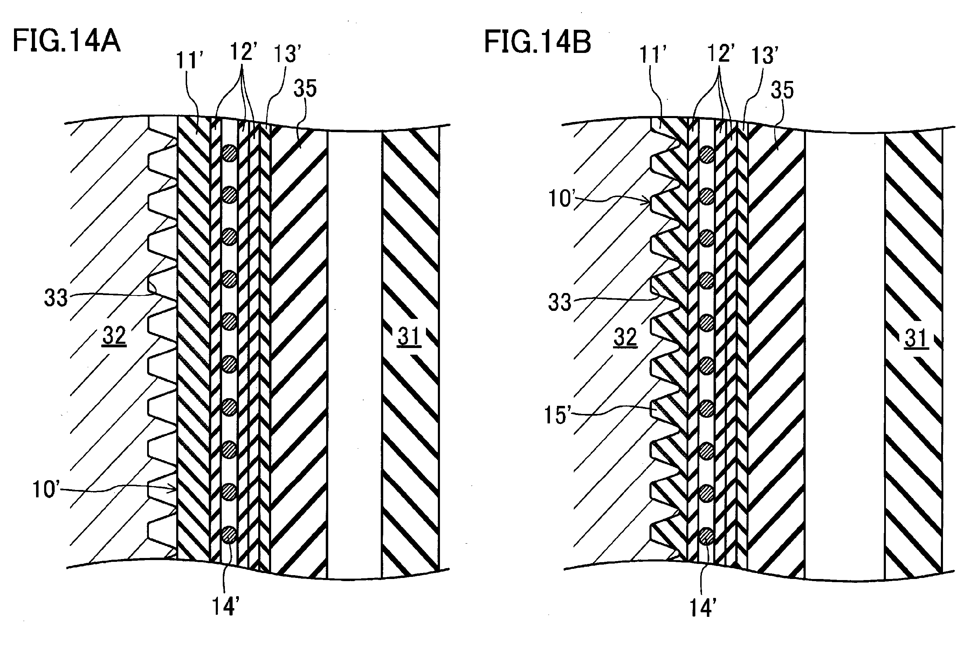

Next, as shown in FIG. 14A and FIG. 14B, the inner mold 31 is positioned inside the rubber sleeve 35 set in the outer mold 32, and hermetically sealed. FIG. 14A and FIG. 14B respectively correspond to FIG. 13A and FIG. 13B.

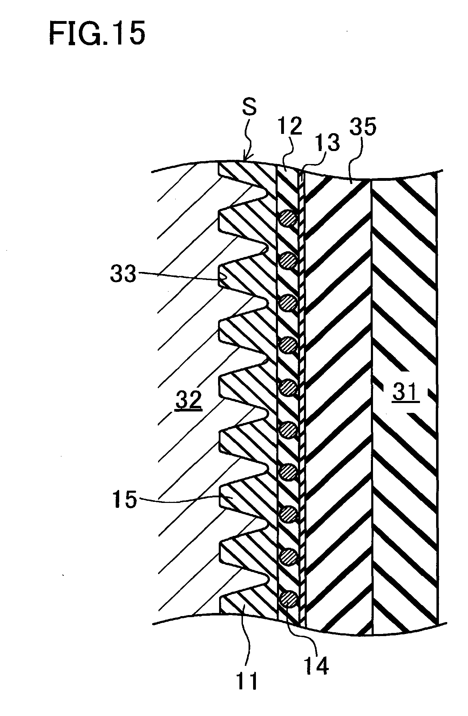

Subsequently, the outer mold 32 is heated and the inner mold 31 is pressurized by introducing, for example, high-pressure air into its hermetically-sealed inner space. In this step, the inner mold 31 expands, and the uncrosslinked rubber sheets 11', 12', 13' comprising the layered body 10' are compressed on the molding surface of the outer mold 32, as shown in FIG. 15. At the same time, cross-linking is promoted in the sheets by the heating and pressurizing, and the sheets are integrated and combined with the twisted yarn 14'. As a result, a cylindrical belt slab S having the V-shaped ribs 15 extending in the circumferential direction on the outer circumferential surface is vulcanized and molded (V-shaped rib formation step). The vulcanization molding temperature of the belt slab S is, for example, 100 to 180°C. The vulcanization molding pressure is, for example, 0.5 to 2.0 MPa. The vulcanization molding time is, for example, 10 to 60 minutes.

The pressure of the inner space of the inner mold 31 is reduced to be released from the hermetically sealed state, and the belt slab S which has been vulcanized and molded between the inner mold 31 and the outer mold 32 via the rubber sleeve 35 is removed. The belt slab S is sliced into rings having a predetermined width, and turned inside out, thereby obtaining the V-ribbed belt B.

The surface of the V-shaped ribs 15 may be ground as needed. However, in the case of the V-ribbed belt B of the first embodiment, short fibers do not need to project from the surface of the V-shaped ribs 15, and therefore, such grinding is basically not needed. Thus, no grinding step is necessary, which simplifies the steps, and moreover, no equipment for grinding is necessary, and material loss due to disposal because of grinding is prevented, compared to the conventional V-ribbed belt fabrication method in which V-shaped ribs formed of a rubber composition blended with short fibers are ground.

### [Second Embodiment]

### (V-ribbed belt B)

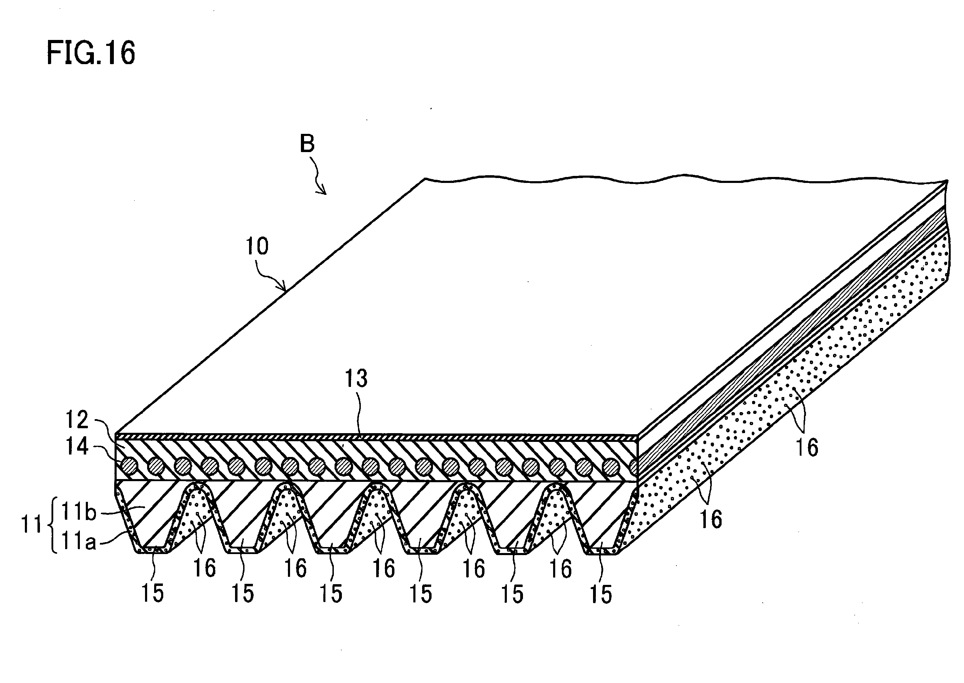

FIG. 16 shows a V-ribbed belt B of the second embodiment. The elements having the same names as in the first embodiment are indicated by the same reference characters as used in the first embodiment.

In the V-ribbed belt B of the second embodiment, a compression rubber layer 11 has a double-layered structure including a surface rubber layer 11a formed into a layer shape which extends along the entire pulley contact surface, and an inner rubber layer 11b located inside the surface rubber layer 11a. The surface rubber layer 11a is made of a rubber composition similar to the rubber composition of the compression rubber layer 11 of the V-ribbed belt B of the first embodiment, and thus, numerous holes are formed inside the V-shaped ribs 15, and numerous pores 16 are formed in the surface of the V-shaped ribs 15. Preferably, the number density of the holes and the pores 16 is higher on the surface side than on the inner side of the surface rubber layer 11a. The inner rubber layer 11b is made of a rubber composition similar to the rubber composition of the surface rubber layer 11a, except that no hollow particles and no foaming agent are blended. The thickness of the surface rubber layer 11a is, for example, 0.3 to 0.6 mm. The thickness of the inner rubber layer 11b is, for example, 1.6 to 2.0 mm.

The other configurations are the same as those in the first embodiment.

### (Fabrication Method of V-ribbed belt B)

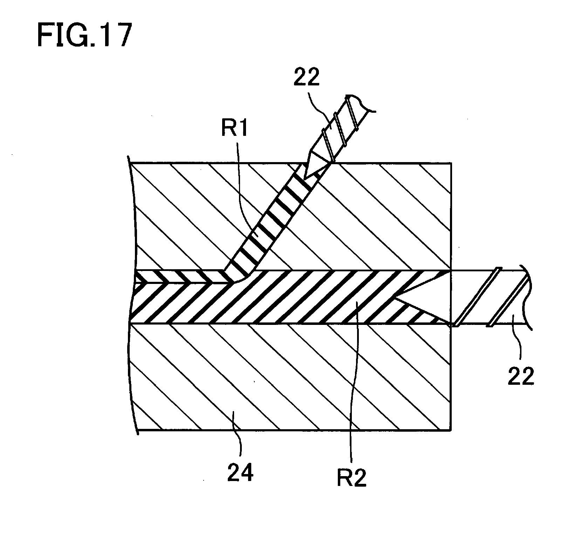

In a fabrication method of the V-ribbed belt B of the second embodiment, in extruding an uncrosslinked rubber sheet 11' for a compression rubber layer, two types of unvulcanized rubber compositions, that is, a first uncrosslinked rubber composition R1 blended with at least one of the hollow particles or the foaming agent, and a second uncrosslinked rubber composition R2 blended with no hollow particles and no foaming agent, are separately kneaded in the cylinder 23, and are layered on each other in the die 24 as shown in FIG. 17.

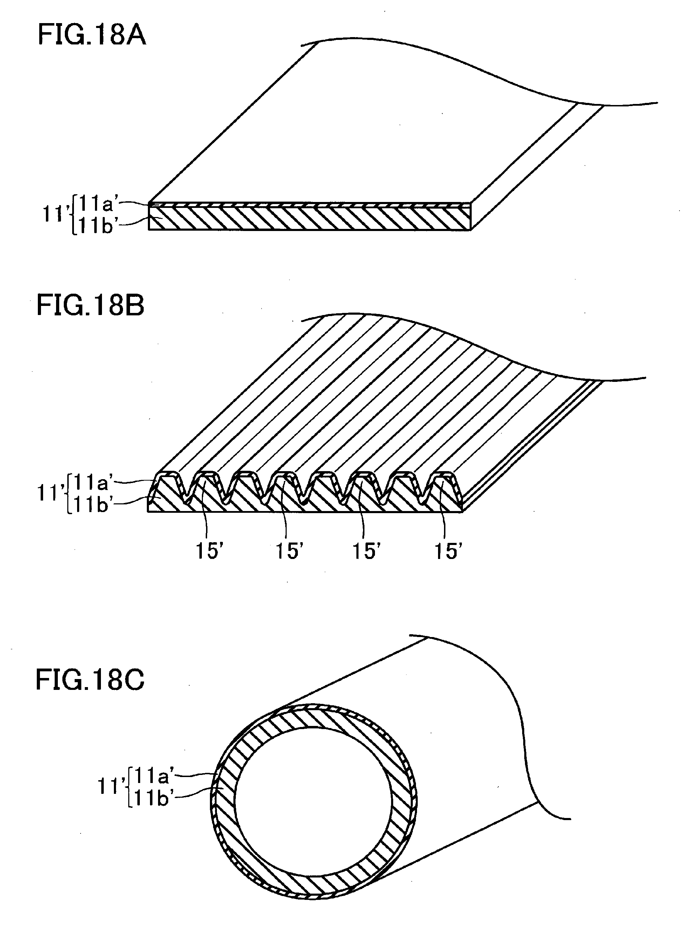

The uncrosslinked rubber sheet 11' to be extruded has a double-layered structure including a first layer 11a' made of the first uncrosslinked rubber composition R1 and a second layer 11b' made of the second uncrosslinked rubber composition R2 layered on the first layer 11a'. Specifically, in the case of the uncrosslinked rubber sheet 11' with no V-shaped rib formation portions 15', the surface layer which is brought into contact with the belt vulcanization-molding die 30 is made of the first layer 11a', and the layer on the other side is made of the second layer 11b' as shown in FIG. 18A. In the case of the flat plate-like uncrosslinked rubber sheet 11' with the V-shaped rib formation portions 15', the layer in which V-shaped rib formation portions 15' are formed and which is brought into contact with the belt vulcanization-molding die 30 is made of the first layer 11a', and the layer on the other side is made of the second layer 11b' as shown in FIG. 18B. In the case of tubular uncrosslinked rubber sheet 11' with no V-shaped rib formation portions 15', the outer surface layer which is brought into contact with the belt vulcanization-molding die 30 is made of the first layer 11a', and the inner side layer is made of the second layer 11b' as shown in FIG. 18C. The thickness of the first layer 11a' is, for example, 0.05 to 1 mm. The thickness of the second layer 11b' is, for example, 2 to 3 mm.

The other configurations and effects are the same as those in the first embodiment.

### [Other Embodiments]

In the first and second embodiments, the belt body 10 is comprised of the compression rubber layer 11, the adhesion rubber layer 12, and the backside rubber layer 13, but is not specifically limited to this configuration. The belt body 10 may be comprised of the compression rubber layer 11 and the adhesion rubber layer 12, and in place of the backside rubber layer 13, reinforcement fabric made, for example, of woven fabric, knitted fabric, unwoven fabric made of fibers such as cotton, polyamide fibers, polyester fibers, and aramid fibers.

In the first and second embodiments, the vulcanization molding is performed using the belt vulcanization-molding die 30, but is not specifically limited to this configuration. The layered body 10' may be continuously vulcanized by rotary curing.

### INDUSTRIAL APPLICABILITY

The present disclosure is useful as a V-ribbed belt fabrication method.

### DESCRIPTION OF REFERENCE CHARACTERS

- B: V-ribbed belt
- R1: first uncrosslinked rubber composition
- R2: second uncrosslinked rubber composition
- S: belt slab
- 10: belt body
- 10': layered body
- 11: compression rubber layer
- 11',12', 13': uncrosslinked rubber sheet
- 11a: surface rubber layer
- 11a': first layer
- 11b: inner rubber layer
- 11b': second layer
- 12: adhesion rubber layer
- 13: backside rubber layer
- 14: core wire
- 14': twisted yarn
- 15: V-shaped rib
- 15': V-shaped rib formation portion
- 16: pores
- 20: extruder
- 21: hopper
- 22: screw
- 23: cylinder
- 24: die
- 24a: discharge opening
- 30: belt vulcanization-molding die
- 31: inner mold
- 32: outer mold
- 33: V-shaped rib formation groove
- 34: cylindrical drum
- 35: rubber sleeve

## Claims

1. A fabrication method of a V-ribbed belt (B) with a plurality of V-shaped ribs (15) each extending in a belt longitudinal direction and having numerous pores (16) in a surface, and arranged side by side in a belt width direction, the method comprising:
a rubber sheet formation step in which an uncrosslinked rubber composition blended with no short fibers is extruded from an extruder (20), thereby forming an uncrosslinked rubber sheet in which the V-shaped ribs (15) are formed, wherein
in the rubber sheet formation step, at least a surface layer of the uncrosslinked rubber sheet, in which surface layer the V-shaped ribs (15) are formed, is made of an uncrosslinked rubber composition blended with at least one of hollow particles or a foaming agent used to form pores (16) in the surface of the V-shaped ribs (15), wherein
in the rubber sheet formation step, a plurality of V-shaped rib formation portions (15') arranged side by side are formed in the uncrosslinked rubber sheet extruded from the extruder (20), using a die (24) provided at the extruder (20) and having a discharge opening (24a) in a form of the V-shaped ribs (15), wherein
in the rubber sheet formation step, a flat plate-like uncrosslinked rubber sheet having a plurality of V-shaped rib formation portions (15') which extend in an extrusion direction and are arranged side by side is extruded from the extruder (20), using the die (24) provided at the extruder (20) and having a narrow slit-like discharge opening (24a) with grooves in the form of the V-shaped ribs (15) being arranged side by side along one of long sides of the slit-like opening.

2. A fabrication method of a V-ribbed belt (B) with a plurality of V-shaped ribs (15) each extending in a belt longitudinal direction and having numerous pores (16) in a surface, and arranged side by side in a belt width direction, the method comprising:
a rubber sheet formation step in which an uncrosslinked rubber composition blended with no short fibers is extruded from an extruder (20), thereby forming an uncrosslinked rubber sheet in which the V-shaped ribs (15) are formed, wherein
in the rubber sheet formation step, at least a surface layer of the uncrosslinked rubber sheet, in which surface layer the V-shaped ribs (15) are formed, is made of an uncrosslinked rubber composition blended with at least one of hollow particles or a foaming agent used to form pores (16) in the surface of the V-shaped ribs (15), wherein
in the rubber sheet formation step, a plurality of V-shaped rib formation portions (15') arranged side by side are formed in the uncrosslinked rubber sheet extruded from the extruder (20), using a die (24) provided at the extruder (20) and having a discharge opening (24a) in a form of the V-shaped ribs (15), wherein
a V-shaped rib formation step in which the flat plate-like uncrosslinked rubber sheet formed in the rubber sheet formation step and having the plurality of V-shaped rib formation portions (15') is brought into contact with a mold surface of a molding die (30) which has V-shaped rib formation grooves (33) in the mold surface, such that the V-shaped rib formation portions (15') are fitted in the V-shaped rib formation grooves (33), and the flat plate-like uncrosslinked rubber sheet is heated and pressed, thereby crosslinking the flat plate-like uncrosslinked rubber sheet and forming the V-shaped ribs (15).

3. The V-ribbed belt (B) fabrication method of claim 2, wherein
in the rubber sheet formation step, a flat plate-like uncrosslinked rubber sheet having a plurality of V-shaped rib formation portions (15') which extend in an extrusion direction and are arranged side by side is extruded from the extruder (20), using a die (24) provided at the extruder (20) and having a narrow slit-like discharge opening (24a) with grooves in the form of the V-shaped ribs (15) being arranged side by side along one of long sides of the slit-like opening.

4. The V-ribbed belt (B) fabrication method of claim 2, wherein
in the rubber sheet formation step, a tubular uncrosslinked rubber sheet having on an inner circumferential surface thereof a plurality of V-shaped rib formation portions (15') which extend in the extrusion direction and are arranged side by side is extruded from the extruder (20), using a die (24) provided at the extruder (20) and having a circular discharge opening (24a) with grooves in the form of the V-shaped ribs (15) being arranged side by side in the inner circumferential surface of the circular opening, and the tubular uncrosslinked rubber sheet is cut along a longitudinal direction to be in a flat plate-like shape.

5. The V-ribbed belt (B) fabrication method of claim 2, wherein
in the rubber sheet formation step, a tubular uncrosslinked rubber sheet having on an outer circumferential surface thereof a plurality of V-shaped rib formation portions (15') which extend in the extrusion direction and are arranged side by side is extruded from the extruder (20), using a die (24) provided at the extruder (20) and having a circular discharge opening (24a) with grooves in the form of the V-shaped ribs (15) being arranged side by side in the outer circumferential surface of the circular opening, and the tubular uncrosslinked rubber sheet is cut along a longitudinal direction to be in a flat plate-like shape.

6. A fabrication method of a V-ribbed belt (B) with a plurality of V-shaped ribs (15) each extending in a belt longitudinal direction and having numerous pores (16) in a surface, and arranged side by side in a belt width direction, the method comprising:
a rubber sheet formation step in which an uncrosslinked rubber composition blended with no short fibers is extruded from an extruder (20), thereby forming an uncrosslinked rubber sheet in which the V-shaped ribs (15) are formed, wherein
in the rubber sheet formation step, at least a surface layer of the uncrosslinked rubber sheet, in which surface layer the V-shaped ribs (15) are formed, is made of an uncrosslinked rubber composition blended with at least one of hollow particles or a foaming agent used to form pores (16) in the surface of the V-shaped ribs (15), wherein
in the rubber sheet formation step, a flat plate-like uncrosslinked rubber sheet is extruded from the extruder (20), using a die (24) provided at the extruder (20) and having a narrow rectangular slit-like discharge opening (24a).

7. The V-ribbed belt (B) fabrication method of claim 1, wherein
in the rubber sheet formation step, a tubular uncrosslinked rubber sheet is extruded from the extruder (20), using a die (24) provided at the extruder (20) and having a circular discharge opening (24a), and the tubular uncrosslinked rubber sheet is cut along a longitudinal direction to be in a flat plate-like shape.

8. The V-ribbed belt (B) fabrication method of claim 6 or 7, further comprising:
a V-shaped rib formation step in which the flat plate-like uncrosslinked rubber sheet formed in the rubber sheet formation step is brought into contact with a mold surface of a molding die (24) which has V-shaped rib formation grooves (33) in the mold surface, and the flat plate-like uncrosslinked rubber sheet is heated and pressed, thereby crosslinking the flat plate-like uncrosslinked rubber sheet and forming the V-shaped ribs (15).

9. The V-ribbed belt (B) fabrication method of claim 1, wherein
in the rubber sheet formation step, a tubular uncrosslinked rubber sheet is extruded from the extruder (20), using a die (24) provided at the extruder (20) and having a circular discharge opening (24a), and
the method further includes a V-shaped rib formation step in which the tubular uncrosslinked rubber sheet formed in the rubber sheet formation step is made to cover a tubular rubber sleeve, and is brought into contact with a mold surface of a molding die (24) which has V-shaped rib formation grooves (33) in the mold surface, and the tubular uncrosslinked rubber sheet is heated and pressed, thereby crosslinking the tubular uncrosslinked rubber sheet and forming the V-shaped ribs (15).

10. The V-ribbed belt (B) fabrication method of any one of claims 1-9, wherein
in the rubber sheet formation step, the uncrosslinked rubber sheet extruded from the extruder (20) is formed to have a first layer which is a surface layer in which the V-shaped ribs (15) are formed and which is made of an uncrosslinked rubber composition blended with at least one of the hollow particles or the foaming agent, and a second layer which is layered on the first layer and which is made of an uncrosslinked rubber composition blended with no hollow particles and no foaming agent.

11. A fabrication method of a V-ribbed belt (B) with a plurality of V-shaped ribs (15) each extending in a belt longitudinal direction and having numerous pores (16) in a surface, and arranged side by side in a belt width direction, the method comprising:
a rubber sheet formation step in which an uncrosslinked rubber composition blended with no short fibers is extruded from an extruder (20), thereby forming an uncrosslinked rubber sheet in which the V-shaped ribs (15) are formed, wherein
in the rubber sheet formation step, at least a surface layer of the uncrosslinked rubber sheet, in which surface layer the V-shaped ribs (15) are formed, is made of an uncrosslinked rubber composition blended with at least one of hollow particles or a foaming agent used to form pores (16) in the surface of the V-shaped ribs (15), wherein
in the rubber sheet formation step, the processing temperature of the extruder (20) is set to below an expansion start temperature of the hollow particles and/or a foaming start temperature of the foaming agent.

12. The V-ribbed belt (B) fabrication method of claim 11, wherein
a surface of the uncrosslinked rubber sheet extruded in the rubber sheet formation step, but not yet provided with the V-shaped ribs (15), is preheated at a temperature which is equal to or higher than the expansion start temperature of the hollow particles and/or the foaming start temperature of the foaming agent, and which is lower than a temperature in forming the V-shaped ribs (15), thereby expanding the hollow particles and/or foaming the foaming agent.

13. The V-ribbed belt (B) fabrication method of claim 11 or 12, wherein
the hollow particles and/or the foaming agent is dispersed or applied to the surface of the uncrosslinked rubber sheet extruded in the rubber sheet formation step, but not yet provided with the V-shaped ribs (15), and the hollow particles are expanded and/or the foaming agent is foamed by the heating in forming the V-shaped ribs (15).

14. The V-ribbed belt (B) fabrication method of claim 2, 8 or 9, wherein
the method does not include a grinding step of grinding a surface of the formed V-shaped ribs (15) after the V-shaped rib formation step.

## Patentansprüche

1. Verfahren zur Herstellung eines Keilrippenriemens (B) mit einer Vielzahl von V-förmigen Rippen (15), die sich jeweils in Längsrichtung des Riemens erstrecken, zahlreiche Poren (16) in einer Oberfläche aufweisen und in der Richtung der Breite des Riemens nebeneinander angeordnet sind, wobei das Verfahren Folgendes umfasst:
einen Kautschukbahn-Bildungsschritt, bei dem eine unvernetzte Kautschukzusammensetzung, der keine kurzen Fasern beigemischt sind, aus einer Strangpresse (20) extrudiert wird, wodurch eine Bahn aus unvernetztem Kautschuk gebildet wird, in der die V-förmigen Rippen (15) gebildet sind, wobei
beim Kautschukbahn-Bildungsschritt wenigstens eine Oberflächenschicht der Bahn aus unvernetztem Kautschuk, wobei in dieser Oberflächenschicht die V-förmigen Rippen (15) gebildet werden, aus einer unvernetzten Kautschukzusammensetzung hergestellt wird, der wenigstens eines aus hohlen Partikeln oder einem Schaumbildner beigemischt ist, die verwendet werden, um Poren (16) in der Oberfläche der V-förmigen Rippen (15) zu bilden, wobei
beim Kautschukbahn-Bildungsschritt eine Vielzahl von nebeneinander angeordneten Abschnitten zur Bildung der V-förmigen Rippen (15') in der aus der Strangpresse (20) extrudierten Bahn aus unvernetztem Kautschuk gebildet wird, indem ein Presswerkzeug (24) verwendet wird, das an der Strangpresse (20) vorgesehen ist und eine Ausflussöffnung (24a) in Form der V-förmigen Rippen (15) aufweist, wobei
beim Kautschukbahn-Bildungsschritt eine ebene plattenförmige Bahn aus unvernetztem Kautschuk mit einer Vielzahl von Abschnitten zur Bildung der V-förmigen Rippen (15'), die sich in einer Extrudierrichtung erstrecken und nebeneinander angeordnet sind, aus der Strangpresse (20) extrudiert wird, wobei das an der Strangpresse (20) vorgesehene Presswerkzeug (24) verwendet wird, das eine schmale schlitzförmige Ausflussöffnung (24a) mit Nuten in der Form der V-förmigen Rippen (15) umfasst, die entlang von einer der Langseiten der schlitzförmigen Öffnung nebeneinander angeordnet sind.

2. Verfahren zur Herstellung eines Keilrippenriemens (B) mit einer Vielzahl von V-förmigen Rippen (15), die sich jeweils in Längsrichtung des Riemens erstrecken, zahlreiche Poren (16) in einer Oberfläche aufweisen und in der Richtung der Breite des Riemens nebeneinander angeordnet sind, wobei das Verfahren Folgendes umfasst:
einen Kautschukbahn-Bildungsschritt, bei dem eine unvernetzte Kautschukzusammensetzung, der keine kurzen Fasern beigemischt sind, aus einer Strangpresse (20) extrudiert wird, wodurch eine Bahn aus unvernetztem Kautschuk gebildet wird, in der die V-förmigen Rippen (15) gebildet sind, wobei
beim Kautschukbahn-Bildungsschritt wenigstens eine Oberflächenschicht der Bahn aus unvernetztem Kautschuk, wobei in dieser Oberflächenschicht die V-förmigen Rippen (15) gebildet werden, aus einer unvernetzten Kautschukzusammensetzung hergestellt wird, der wenigstens eines aus hohlen Partikeln oder einem Schaumbildner beigemischt ist, die verwendet werden, um Poren (16) in der Oberfläche der V-förmigen Rippen (15) zu bilden, wobei
beim Kautschukbahn-Bildungsschritt eine Vielzahl von nebeneinander angeordneten Abschnitten zur Bildung der V-förmigen Rippen (15') in der aus der Strangpresse (20) extrudierten Bahn aus unvernetztem Kautschuk gebildet wird, indem ein Presswerkzeug (24) verwendet wird, das an der Strangpresse (20) vorgesehen ist und eine Ausflussöffnung (24a) in Form der V-förmigen Rippen (15) aufweist, und
einen Schritt der Bildung der V-förmigen Rippen, bei dem die ebene plattenförmige Bahn aus unvernetztem Kautschuk, welche beim Kautschukbahn-Bildungsschritt gebildet wurde und die Vielzahl von Abschnitten zur Bildung der V-förmigen Rippen (15') aufweist, mit einer Formoberfläche einer Pressform (30) in Kontakt gebracht wird, das V-förmige Rippenbildungsnuten (33) in der Formoberfläche aufweist, so dass die V-förmigen Rippenbildungsabschnitte (15') in die V-förmigen Rippenbildungsnuten (33) eingepasst werden, und wobei die ebene plattenförmige Bahn aus unvernetztem Kautschuk erhitzt und gepresst wird, wodurch die ebene plattenförmige Bahn aus unvernetztem Kautschuk vernetzt wird und die V-förmigen Rippen (15) gebildet werden.

3. Verfahren zur Herstellung eines Keilrippenriemens (B) nach Anspruch 2, wobei
beim Kautschukbahn-Bildungsschritt eine ebene plattenförmige Bahn aus unvernetztem Kautschuk mit einer Vielzahl von Abschnitten zur Bildung der V-förmigen Rippen (15'), die sich in einer Extrudierrichtung erstrecken und nebeneinander angeordnet sind, aus der Strangpresse (20) extrudiert wird, wobei ein an der Strangpresse (20) angeordnetes Presswerkzeug (24) verwendet wird, das eine schmale schlitzförmige Ausflussöffnung (24a) mit Nuten in der Form der V-förmigen Rippen (15) umfasst, die entlang von einer der Langseiten der schlitzförmigen Öffnung nebeneinander angeordnet sind.

4. Verfahren zur Herstellung eines Keilrippenriemens (B) nach Anspruch 2, wobei
beim Kautschukbahn-Bildungsschritt eine rohrförmige Bahn aus unvernetztem Kautschuk, an deren innerer Umfangsfläche eine Vielzahl von Abschnitten zur Bildung der V-förmigen Rippen (15') gebildet ist, die sich in der Extrudierrichtung erstrecken und nebeneinander angeordnet sind, aus der Strangpresse (20) extrudiert wird, indem ein Presswerkzeug (24) verwendet wird, das an der Strangpresse (20) vorgesehen ist und eine kreisförmige Ausflussöffnung (24a) mit Nuten in der Form der V-förmigen Rippen (15) aufweist, die nebeneinander an der inneren Umfangsfläche der kreisförmigen Öffnung angeordnet sind, und indem die rohrförmige Bahn aus unvernetztem Kautschuk in Längsrichtung geschnitten wird, so dass sie in einer ebenen plattenförmigen Form vorliegt.

5. Verfahren zur Herstellung eines Keilrippenriemens (B) nach Anspruch 2, wobei
beim Kautschukbahn-Bildungsschritt eine rohrförmige Bahn aus unvernetztem Kautschuk, an deren äußerer Umfangsfläche eine Vielzahl von Abschnitten zur Bildung der V-förmigen Rippen (15') gebildet ist, die sich in der Extrudierrichtung erstrecken und nebeneinander angeordnet sind, aus der Strangpresse (20) extrudiert wird, indem ein Presswerkzeug (24) verwendet wird, das an der Strangpresse (20) vorgesehen ist und eine kreisförmige Ausflussöffnung (24a) mit Nuten in der Form der V-förmigen Rippen (15) aufweist, die nebeneinander an der äußeren Umfangsfläche der kreisförmigen Öffnung angeordnet sind, und indem die rohrförmige Bahn aus unvernetztem Kautschuk in Längsrichtung geschnitten wird, so dass sie in einer ebenen plattenförmigen Form vorliegt.

6. Verfahren zur Herstellung eines Keilrippenriemens (B) mit einer Vielzahl von V-förmigen Rippen (15), die sich jeweils in Längsrichtung des Riemens erstrecken, zahlreiche Poren (16) in einer Oberfläche aufweisen und in der Richtung der Breite des Riemens nebeneinander angeordnet sind, wobei das Verfahren Folgendes umfasst:
einen Kautschukbahn-Bildungsschritt, bei dem eine unvernetzte Kautschukzusammensetzung, der keine kurzen Fasern beigemischt sind, aus einer Strangpresse (20) extrudiert wird, wodurch eine Bahn aus unvernetztem Kautschuk gebildet wird, in der die V-förmigen Rippen (15) gebildet sind, wobei
beim Kautschukbahn-Bildungsschritt wenigstens eine Oberflächenschicht der Bahn aus unvernetztem Kautschuk, wobei in dieser Oberflächenschicht die V-förmigen Rippen (15) gebildet werden, aus einer unvernetzten Kautschukzusammensetzung hergestellt wird, der wenigstens eines aus hohlen Partikeln oder einem Schaumbildner beigemischt ist, die verwendet werden, um Poren (16) in der Oberfläche der V-förmigen Rippen (15) zu bilden, wobei
beim Kautschukbahn-Bildungsschritt eine ebene plattenförmige Bahn aus unvernetztem Kautschuk aus der Strangpresse (20) extrudiert wird, wobei ein Presswerkzeug (24) verwendet wird, das an der Strangpresse (20) vorgesehen ist und eine schmale rechteckige schlitzförmige Ausflussöffnung (24a) aufweist.

7. Verfahren zur Herstellung eines Keilrippenriemens (B) nach Anspruch 1, wobei
beim Kautschukbahn-Bildungsschritt eine rohrförmige Bahn aus unvernetztem Kautschuk aus der Strangpresse (20) extrudiert wird, wobei ein Presswerkzeug (24) verwendet wird, das an der Strangpresse (20) vorgesehen ist und eine kreisförmige Ausflussöffnung (24a) aufweist, und wobei die Bahn aus unvernetztem Kautschuk in Längsrichtung geschnitten wird, so dass sie in einer ebenen plattenförmigen Form vorliegt.

8. Verfahren zur Herstellung eines Keilrippenriemens (B) nach Anspruch 6 oder 7, ferner umfassend:
einen Schritt der Bildung der V-förmigen Rippen, bei dem die ebene plattenförmige Bahn aus unvernetztem Kautschuk, die beim Kautschukbahn-Bildungsschritt gebildet wurde, mit einer Formoberfläche einer Pressform (24) in Kontakt gebracht wird, die V-förmige Rippenbildungsnuten (33) in der Formoberfläche aufweist, und wobei die ebene plattenförmige Bahn aus unvernetztem Kautschuk erhitzt und gepresst wird, wodurch die ebene plattenförmige Bahn aus unvernetztem Kautschuk vernetzt wird und die V-förmigen Rippen (15) gebildet werden.

9. Verfahren zur Herstellung eines Keilrippenriemens (B) nach Anspruch 1, wobei
beim Kautschukbahn-Bildungsschritt eine rohrförmige Bahn aus unvernetztem Kautschuk aus der Strangpresse (20) extrudiert wird, wobei ein Presswerkzeug (24) verwendet wird, das an der Strangpresse (20) vorgesehen ist und eine kreisförmige Ausflussöffnung (24a) aufweist, und
wobei das Verfahren ferner einen Schritt der Bildung der V-förmigen Rippen aufweist, bei dem die im Kautschukbahn-Bildungsschritt gebildete rohrförmige Bahn aus unvernetztem Kautschuk so angeordnet wird, dass sie eine rohrförmige Kautschukmanschette bedeckt, und mit einer Formoberfläche einer Pressform (24) in Kontakt gebracht wird, die V-förmige Rippenbildungsnuten (33) in der Formoberfläche aufweist, und wobei die rohrförmige Bahn aus unvernetztem Kautschuk erhitzt und gepresst wird, wodurch die rohrförmige Bahn aus unvernetztem Kautschuk vernetzt wird und die V-förmigen Rippen (15) gebildet werden.

10. Verfahren zur Herstellung eines Keilrippenriemens (B) nach einem der Ansprüche 1-9, wobei
beim Kautschukbahn-Bildungsschritt die aus der Strangpresse (20) extrudierte Bahn aus unvernetztem Kautschuk derart geformt wird, dass sie Folgendes aufweist: eine erste Schicht, bei der es sich um eine Oberflächenschicht handelt, in der die V-förmigen Rippen (15) gebildet sind und die aus einer unvernetzten Kautschukzusammensetzung gebildet ist, der wenigstens eines aus den hohlen Partikeln oder dem Schaumbildner beigemischt ist, und eine zweite Schicht, die sich auf der ersten Schicht befindet und die aus einer unvernetzten Kautschukzusammensetzung gebildet ist, der keine hohlen Partikel und kein Schaumbildner beigemischt ist.

11. Verfahren zur Herstellung eines Keilrippenriemens (B) mit einer Vielzahl von V-förmigen Rippen (15), die sich jeweils in Längsrichtung des Riemens erstrecken, zahlreiche Poren (16) in einer Oberfläche aufweisen und in der Richtung der Breite des Riemens nebeneinander angeordnet sind, wobei das Verfahren Folgendes umfasst:
einen Kautschukbahn-Bildungsschritt, bei dem eine unvernetzte Kautschukzusammensetzung, der keine kurzen Fasern beigemischt sind, aus einer Strangpresse (20) extrudiert wird, wodurch eine Bahn aus unvernetztem Kautschuk gebildet wird, in der die V-förmigen Rippen (15) gebildet sind, wobei
beim Kautschukbahn-Bildungsschritt wenigstens eine Oberflächenschicht der Bahn aus unvernetztem Kautschuk, wobei in dieser Oberflächenschicht die V-förmigen Rippen (15) gebildet werden, aus einer unvernetzten Kautschukzusammensetzung hergestellt wird, der wenigstens eines aus hohlen Partikeln oder einem Schaumbildner beigemischt ist, die verwendet werden, um Poren (16) in der Oberfläche der V-förmigen Rippen (15) zu bilden, wobei
beim Kautschukbahn-Bildungsschritt die Prozesstemperatur der Strangpresse (20) so eingestellt wird, dass sie unter einer Expansionsbeginntemperatur der hohlen Partikel und/oder einer Schäumungsbeginntemperatur des Schaumbildners liegt.

12. Verfahren zur Herstellung eines Keilrippenriemens (B) nach Anspruch 11, wobei
eine Oberfläche der Bahn aus unvernetztem Kautschuk, die beim Kautschukbahn-Bildungsschritt extrudiert wurde, aber noch nicht mit den V-förmigen Rippen (15) versehen ist, auf eine Temperatur vorgewärmt wird, die gleich oder höher als die Expansionsbeginntemperatur der hohlen Partikel und/oder die Aufschäumungsbeginntemperatur des Schaumbildners ist, und die niedriger als eine Temperatur bei der Bildung der V-förmigen Rippen (15) ist, wodurch die hohlen Partikel expandiert werden und/oder der Schaumbildner aufschäumt.

13. Verfahren zur Herstellung eines Keilrippenriemens (B) nach Anspruch 11 oder 12, wobei
die hohlen Partikel und/oder der Schaumbildner auf der Oberfläche der Bahn aus unvernetztem Kautschuk, die beim Kautschukbahn-Bildungsschritt extrudiert wurde, aber noch nicht mit den V-förmigen Rippen (15) versehen ist, verteilt oder aufgebracht werden und wobei die Expansion der hohlen Partikel und/oder die Aufschäumung des Schaumbildners durch die Erhitzung bei der Bildung der V-förmigen Rippen (15) erfolgt.

14. Verfahren zur Herstellung eines Keilrippenriemens (B) nach Anspruch 2, 8 oder 9, wobei
das Verfahren keinen Schleifschritt umfasst, bei dem eine Oberfläche der gebildeten V-förmigen Rippen (15) nach dem Schritt der Bildung der V-förmigen Rippen beschliffen wird.

## Revendications

1. Un procédé de fabrication d'une courroie à nervures en V (B) avec une pluralité de nervures en forme de V (15) s'étendant chacune dans le sens longitudinal de la courroie et ayant de nombreux pores (16) sur une surface, et disposées côte à côte dans le sens de la largeur de la courroie, le procédé comprenant :
Une étape de formation d'une feuille de caoutchouc à laquelle une composition de caoutchouc non réticulé mélangé à aucune fibre courte est extrudée à partir d'une extrudeuse (20), formant ainsi une feuille de caoutchouc non réticulé dans laquelle les nervures en forme de V (15) sont formées, où
À l'étape de formation de la feuille de caoutchouc, au moins une couche superficielle de la feuille de caoutchouc non réticulé sur laquelle les nervures en forme de V (15) sont formées, est faite dans une composition de caoutchouc non réticulé mélangé avec au moins une des particules creuses ou un agent moussant utilisé pour former des pores (16) sur la surface des nervures en forme de V (15), où
À l'étape de formation d'une feuille de caoutchouc, une pluralité de portions de formation de nervure en forme de V (15') disposées côte à côte sont formées dans la feuille de caoutchouc non réticulé extrudée à partir de l'extrudeuse (20), à l'aide d'une matrice (24) fournie sur l'extrudeuse (20) et ayant une ouverture de déchargement (24a) en forme des nervures en V (15), où
À l'étape de formation de feuille de caoutchouc, une feuille de caoutchouc non réticulé en forme de plaque plate ayant une pluralité de portions de formation de nervures en forme de V (15') qui s'étendent dans un sens d'extrusion et sont disposées côte à côte, est extrudée à partir de l'extrudeuse (20), à l'aide de la matrice (24) fournie sur l'extrudeuse (20) et ayant une ouverture de déchargement comme une entaille étroite (24a) avec des rainures en forme des nervures en V (15) étant disposées côte à côte le long de longs côtés de l'ouverture en forme d'entaille.

2. Un procédé de fabrication d'une courroie à nervures en V (B) avec une pluralité de nervures en forme de V (15) s'étendant chacune dans le sens longitudinal de la courroie et ayant de nombreux pores (16) sur une surface, et disposées côte à côte dans le sens de la largeur de la courroie, le procédé comprenant :
Une étape de formation d'une feuille de caoutchouc à laquelle une composition de caoutchouc non réticulé mélangé à aucune fibre courte est extrudée à partir d'une extrudeuse (20), formant ainsi une feuille de caoutchouc non réticulé dans laquelle les nervures en forme de V (15) sont formées, où
À l'étape de formation de la feuille de caoutchouc, au moins une couche superficielle de la feuille de caoutchouc non réticulé sur laquelle les nervures en forme de V (15) sont formées, est faite dans une composition de caoutchouc non réticulé mélangé avec au moins une des particules creuses ou un agent moussant utilisé pour former des pores (16) sur la surface des nervures en forme de V (15), où
À l'étape de formation d'une feuille de caoutchouc, une pluralité de portions de formation de nervure en forme de V (15') disposées côte à côte sont formées dans la feuille de caoutchouc non réticulé extrudée à partir de l'extrudeuse (20), à l'aide d'une matrice (24) fournie sur l'extrudeuse (20) et ayant une ouverture de déchargement (24a) en forme des nervures en V (15), où
Une étape de formation de nervures en forme de V à laquelle la feuille de caoutchouc non réticulé en forme de plaque plate formée à l'étape de formation de feuille de caoutchouc et ayant une pluralité de portions de formation de nervures en forme de V (15') est mise en contact avec une surface de moulage d'une matrice de moulage (30) qui possède des rainures de formation de nervures en forme de V (33) sur la surface de moulage, de sorte que les portions de formation de nervures en forme de V (15') sont placées dans les rainures de formation de nervures en forme de V (33), et la feuille de caoutchouc non réticulé en forme de plaque plate est chauffée et pressée, réticulant ainsi la feuille de caoutchouc en forme de plaque plate et formant les nervures en forme de V (15).

3. Le procédé de fabrication de la courroie à nervures en V (B) de la revendication 2, où
à l'étape de formation d'une feuille de caoutchouc, une feuille de caoutchouc non réticulé en forme de plaque plate ayant une pluralité de portions de formation de nervures en forme de V (15') qui s'étendent dans un sens d'extrusion et sont disposées côte à côte, est extrudée à partir de l'extrudeuse (20), à l'aide d'une matrice (24) fournie sur l'extrudeuse (20) et ayant une ouverture de déchargement comme une entaille étroite (24a) avec des rainures en forme des nervures en V (15) étant disposées côte à côte le long d'un des longs côtés de l'ouverture en forme d'entaille.

4. Le procédé de fabrication de la courroie à nervures en V (B) de la revendication 2, où
à l'étape de formation d'une feuille de caoutchouc, une feuille de caoutchouc non réticulé tubulaire ayant sur une surface circonférentielle interne une pluralité de portions de formation de nervures en forme de V (15') qui s'étendent dans le sens d'extrusion et sont disposées côte à côte, est extrudée à partir de l'extrudeuse (20), à l'aide d'une matrice (24) fournie sur l'extrudeuse (20) et ayant une ouverture de déchargement circulaire (24a) avec des rainures en forme des nervures en V (15) étant disposées côte à côte dans la surface circonférentielle interne de l'ouverture circulaire, et la feuille de caoutchouc non réticulé tubulaire est découpée dans le sens longitudinal pour être en forme de plaque plate.

5. Le procédé de fabrication de la courroie à nervures en V (B) de la revendication 2, où
à l'étape de formation d'une feuille de caoutchouc, une feuille de caoutchouc non réticulé tubulaire ayant sur une surface circonférentielle externe une pluralité de portions de formation de nervures en forme de V (15') qui s'étendent dans le sens d'extrusion et sont disposées côte à côte, est extrudée à partir de l'extrudeuse (20), à l'aide d'une matrice (24) fournie sur l'extrudeuse (20) et ayant une ouverture de déchargement circulaire (24a) avec des rainures en forme des nervures en V (15) étant disposées côte à côte dans la surface circonférentielle externe de l'ouverture circulaire, et la feuille de caoutchouc non réticulé tubulaire est découpée dans le sens longitudinal pour être en forme de plaque plate.

6. Un procédé de fabrication d'une courroie à nervures en V (B) avec une pluralité de nervures en forme de V (15) s'étendant chacune dans le sens longitudinal de la courroie et ayant de nombreux pores (16) sur une surface, et disposées côte à côte dans le sens de la largeur de la courroie, le procédé comprenant :
Une étape de formation d'une feuille de caoutchouc à laquelle une composition de caoutchouc non réticulé mélangé à aucune fibre courte est extrudée à partir d'une extrudeuse (20), formant ainsi une feuille de caoutchouc non réticulé dans laquelle les nervures en forme de V (15) sont formées, où
À l'étape de formation de la feuille de caoutchouc, au moins une couche superficielle de la feuille de caoutchouc non réticulé sur laquelle les nervures en forme de V (15) sont formées, est faite dans une composition de caoutchouc non réticulé mélangé avec au moins une des particules creuses ou un agent moussant utilisé pour former des pores (16) sur la surface des nervures en forme de V (15), où
À l'étape de formation de feuille de caoutchouc, une feuille de caoutchouc non réticulé en forme de plaque plate est extrudée à partir de l'extrudeuse (20), à l'aide d'une matrice (24) fournie sur l'extrudeuse (20) et ayant une ouverture de déchargement comme une entaille rectangulaire étroite (24a).

7. Le procédé de fabrication de la courroie à nervures en V (B) de la revendication 1, où
À l'étape de formation de feuille de caoutchouc, une feuille de caoutchouc non réticulé tubulaire est extrudée à partir de l'extrudeuse (20), à l'aide d'une matrice (24) fournie sur l'extrudeuse (20) et ayant une ouverture de déchargement circulaire (24a), et la feuille de caoutchouc non réticulé tubulaire est découpée dans le sens longitudinal pour être en forme de plaque plate.

8. Le procédé de fabrication de la courroie à nervures en V (B) de la revendication 6 ou 7, comprenant de plus :
Une étape de formation de nervures en forme de V à laquelle la feuille de caoutchouc non réticulé en forme de plaque plate formée à l'étape de formation de feuille de caoutchouc est mise en contact avec une surface de moulage d'une matrice de moulage (24) qui possède des rainures de formation de nervures en forme de V (33) sur la surface de moulage, et la feuille de caoutchouc non réticulé en forme de plaque plate est chauffée et pressée, réticulant ainsi la feuille de caoutchouc en forme de plaque plate et formant les nervures en forme de V (15).

9. Le procédé de fabrication de la courroie à nervures en V (B) de la revendication 1, où
À l'étape de formation de feuille de caoutchouc, une feuille de caoutchouc non réticulé tubulaire est extrudée à partir de l'extrudeuse (20), à l'aide d'une matrice (24) fournie sur l'extrudeuse (20) et ayant une ouverture de déchargement circulaire (24a), et
Le procédé inclut de plus une étape de formation de nervures en forme de V à laquelle la feuille de caoutchouc non réticulé tubulaire formée à l'étape de formation de feuille de caoutchouc est faite pour couvrir un manchon en caoutchouc tubulaire, et est mise en contact avec une surface de moulage d'une matrice de moulage (24) qui possède des rainures de formation de nervures en forme de V (33) sur la surface de moulage, et la feuille de caoutchouc non réticulé tubulaire est chauffée et pressée, réticulant ainsi la feuille de caoutchouc non réticulé tubulaire et formant les nervures en forme de V (15).

10. Le procédé de fabrication de la courroie à nervures en V (B) de l'une des revendications 1-9, où à l'étape de formation de la feuille de caoutchouc, la feuille de caoutchouc non réticulé extrudée à partir de l'extrudeuse (20) est formée pour avoir une première couche qui est une couche superficielle sur laquelle les nervures en forme de V (15) sont formées et qui est faite avec une composition de caoutchouc non réticulé mélangé à au moins une des particules creuses ou l'agent moussant, et une deuxième couche qui est posée sur la première couche et qui est faite avec une composition de caoutchouc non réticulé mélangée avec aucune particule creuse et aucun agent moussant.

11. Un procédé de fabrication d'une courroie à nervures en V (B) avec une pluralité de nervures en forme de V (15) s'étendant chacune dans le sens longitudinal de la courroie et ayant de nombreux pores (16) sur une surface, et disposées côte à côte dans le sens de la largeur de la courroie, le procédé comprenant :
Une étape de formation d'une feuille de caoutchouc à laquelle une composition de caoutchouc non réticulé mélangé à aucune fibre courte est extrudée à partir d'une extrudeuse (20), formant ainsi une feuille de caoutchouc non réticulé dans laquelle les nervures en forme de V (15) sont formées, où
À l'étape de formation de la feuille de caoutchouc, au moins une couche superficielle de la feuille de caoutchouc non réticulé sur laquelle les nervures en forme de V (15) sont formées, est faite dans une composition de caoutchouc non réticulé mélangé avec au moins une des particules creuses ou un agent moussant utilisé pour former des pores (16) sur la surface des nervures en forme de V (15), où
À l'étape de formation d'une feuille de caoutchouc, la température de traitement de l'extrudeuse (20) est réglée en-dessous d'une température de démarrage d'expansion des particules creuses et/ou une température de démarrage de mousse de l'agent moussant.

12. Le procédé de fabrication de la courroie à nervures en V (B) de la revendication 11, où
Une surface de la feuille de caoutchouc non réticulé extrudée à l'étape de formation de feuille de caoutchouc, mais pas encore pourvue des nervures en forme de V (15), est préchauffée à une température qui est égale ou supérieure à la température de démarrage de l'expansion des particules creuses et/ou la température de démarrage de mousse de l'agent moussant, et qui est inférieure à une température pour former les nervures en forme de V (15), étendant les particules creuses et/ou faisant mousser l'agent moussant.

13. Le procédé de fabrication de la courroie à nervures en V (B) de la revendication 11 ou 12, où
Les particules creuses et/ou l'agent moussant est dispersé ou appliqué sur la surface de la feuille de caoutchouc non réticulé extrudée à l'étape de formation de la feuille de caoutchouc, mais pas encore pourvue des nervures en forme de V (15), et les particules creuses s'étendent et/ou l'agent moussant mousse par le chauffage lors de la formation des nervures en forme de V (15).

14. Le procédé de fabrication de la courroie à nervures en V (B) de la revendication 2, 8 ou 9 où le procédé n'inclut pas une étape de meulage pour meuler une surface des nervures en V (15) formées après l'étape de formation des nervures en forme de V.
